Europäisches Patentamt

European Patent Office

Office européen des brevets

(11) Publication number: **0 141 133**
**B1**

# (12) EUROPEAN PATENT SPECIFICATION

(45) Date of publication of patent specification: **21.10.87**

(21) Application number: **84110301.3**

(22) Date of filing: **29.08.84**

(51) Int. Cl.[4]: **C 08 L 21/00,** C 08 K 5/34,
C 08 J 5/10, B 32 B 25/02,
B 60 C 9/16

(54) **Rubber compositions and articles thereof having improved metal adhesion and metal adhesion retention.**

(30) Priority: **14.09.83 US 531852**

(43) Date of publication of application:
**15.05.85 Bulletin 85/20**

(45) Publication of the grant of the patent:
**21.10.87 Bulletin 87/43**

(84) Designated Contracting States:
**BE DE FR GB IT LU**

(56) References cited:
**EP-A-0 056 156**
**DE-A-3 100 570**

(73) Proprietor: **THE FIRESTONE TIRE & RUBBER
COMPANY**
**1200 Firestone Parkway**
**Akron, Ohio 44317 (US)**

(72) Inventor: **Ravagnani, Frederick J.**
**4606 Sherylton Hills**
**Uniontown Ohio 44685 (US)**
Inventor: **Schonfeld, Steven E.**
**702 N. Revere Road**
**Akron Ohio 44313 (US)**
Inventor: **Halasa, Adel F.**
**P.O. Box 217A**
**Bath Ohio 44210 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

## 0 141 133

**Description**

The present invention is directed to a vulcanizable rubber composition having improved metal adhesion and metal adhesion retention properties with bright steel metallic reinforcing elements embedded therein, a tire containing such a composition, and a method for improving metal adhesion and metal adhesion retention properties between a vulcanizable rubber composition and bright steel metallic reinforcing elements. Flat sheets or strips of such stocks, reinforced with metal or fibers, are utilized as plies or other components in the manufacture of tires, repair stocks for retreading tires, conveyor belts, hoses and the like and are referred to in the art as rubber skim stocks. Skim refers to a relatively thin layer or coating of the rubber over the reinforcement filaments or cords. Greater thicknesses of rubber are also bonded to metal in other instances such as motor mounts and these would not be termed skim stocks.

In the manufacture of the foregoing rubber articles, particularly steel-belted bias and radial tires, it has become common to reinforce the rubber skim stock material with steel wire or cable. One of the more important uses for a metallic reinforced rubber is as a belt where one or more of these belts are substantially circumferentially oriented beneath the tread stock to maintain the integrity and shape of the tire during inflation and subsequent load. Other areas where metal reinforced rubber skim stock may be utilized is in the body ply, bead or chafer of a tire.

In order for these components to function effectively, it is imperative that adhesion between the rubber and the steel cord be effectively maintained. Because steel is prone to oxidation, which even in minor degree is highly deleterious to the necessary adhesion with the rubber skim stock, and it would be most impractical to incorporate a chemically clean, oxidation-free steel cord in the belt at the time of its manufacture, the steel cord is plated with zinc or brass thereby protecting it from oxidation until it can be used. However, reinforced rubber components are cut to size from larger calendered sheets leaving severed edges of steel wire or cable which are uncoated. These cut edges are referred to as bright steel which term is synonomous with uncoated and unoxidized steel.

While adhesion between zinc or brass-plated steel cord and rubber is generally far greater than that between the latter and oxidized steel, existing data determined from article life as well as modern testing techniques indicates that adhesion obtained between bright steel cord and the elastomer must be increased for improved article life and service. Providing adhesion between the rubber skim stock and bright steel is preferably obtained without adversely affecting the adhesion between the rubber and plated steel cord.

In order to promote adhesion between rubber and ferrous metals it is known to employ a variety of metallic salts or complexes or other additives as coatings to the metal or as an ingredient in a rubber composition.

Representative of the art which discloses the use of an additive ingredient in the rubber stock are three patents. US—A—4 203 874 is directed toward a rubber composition and tire having improved rubber-to-metal adhesion and a method for improving the adhesion therebetween. All three inventions are based on the addition of a transition metal salt of para-aminobenzoic acid with transition metals such as Ni, Cr, Mn, Zn, Mo, Cd, Zn, Ag and Ti.

US—A—4 239 663 is similar to US—A—4 203 874 wherein para-aminobenzoic acid or the cobalt salt thereof is added to improve rubber-to-metal adhesion.

US—A—4 324 281 also provides for improved rubber-to-metal adhesion in rubber stocks and tires as well as a method for improving the adhesion. The ingredient added for practice of these inventions is a tetracarboxylic dianhydride, one preferred example being 3,3'-4,4'-benzophenone tetracarboxylic dianhydride.

A fourth U.S. patent, US—A—3 993 847, employs a separate adhesive layer and an ingredient for the rubber compound in a process for laminating rubber to a ferrous metal and the laminated articles resulting therefrom. Improved rubber-to-metal adhesion is obtained by using an adhesive layer comprising an interpolymer of a conjugated diene and a polymerizable heterocyclic nitrogen base and containing silica filler. Adhesion is optionally improved further by the addition of a cobalt compound, *e.g.*, carboxylate, chloride or nitrate. A primary objective of the invention disclosed is that the use of the adhesive layer eliminates the need to employ plated steel.

Thus, while others have sought to enhance adhesion between rubber compositions and metals by employing separate adhesive layers and/or various metal salts, complexes or other ingredients in the stock, the art of which we are aware has not disclosed the exclusive use of the cobalt compounds set forth hereinbelow in a vulcanizable rubber stock to increase adhesion properties between rubber and metallic reinforcement, particularly bright steel.

The present invention provides a vulcanizable rubber composition having improved metal adhesion and metal adhesion retention properties with bright steel metallic reinforcing elements embedded therein by incorporating from 0.2 to 6.0 parts by weight of a compound selected from the group consisting of cobalt chloride bis(8-hydroxyquinolate) and cobalt bis(8-hydroxyquinolate) per 100 parts of the rubber component in the rubber composition prior to curing.

The present invention further provides a tire containing a cured rubber composition possessing improved metal adhesion and metal adhesion retention properties with bright steel metallic reinforcing elements embedded therein by incorporating from 0.2 to 6.0 parts by weight of a compound selected from

2

the group consisting of cobalt chloride bis(8-hydroxyquinolate) and cobalt bis(8-hydroxyquinolate) per 100 parts of the rubber component of the rubber composition prior to curing.

Still further, the present invention provides a method of improving metal adhesion and metal adhesion retention properties between a vulcanizable rubber composition and bright steel metallic reinforcing elements including the step of dispersing from 0.2 to 6.0 parts by weight of a compound selected from the group consisting of cobalt chloride bis(8-hydroxyquinolate) and cobalt bis(8-hydroxyquinolate) per 100 parts of the rubber component in the rubber composition prior to curing.

The metallic reinforcing elements employed in any of the foregoing inventions include brass-plated and zinc-plated steel cord. Adhesion for the first time is also provided between the rubber and bright steel such as clean, unoxidized steel cord or cut edges of plated steel cord. The rubber stock can also contain conventional components for providing adhesion between the rubber and plated steel cord which components have not improved adhesion to bright steel.

To illustrate the present invention, a typical example of a rubber component with metallic reinforcement embedded therein was chosen. In particular, the example used to demonstrate the invention was a rubber skim stock which is suitable for the preparation of rubber articles such as tires. Adhesion between this stock with steel reinforcement subsequent to vulcanization was measured and has also been presented hereinbelow.

The polymer portion of the rubber composition used in the following examples comprised a blend of 75 parts by weight of natural rubber and 25 parts by weight of polybutadiene. Polymer type, however, is not deemed to be a limitation to the practice of the instant invention. Natural rubber may be employed in either a pure or blended state with synthetic rubbers such as styrene butadiene, synthetic isoprene or other synthetic rubbers. Further, pure forms of synthetic rubbers such as those disclosed may be used either alone or blended with other synthetic rubbers.

The additive component utilized in the practice of the present invention includes either cobalt chloride bis(8-hydroxyquinolate) or cobalt bis(8-hydroxyquinolate). Both cobalt compounds were obtained from Aldrich Chemical Co. Amounts of the cobalt compounds employed can range from 0.2 to 6.0 parts per hundred parts of rubber (phr) with 2.0 to 4.0 being preferred.

In order to determine improvement in adhesion and adhesion retention obtained when the cobalt compounds of the present invention are added to a rubber composition, T-adhesion tests (rubber-to-steel cord) were conducted according to the procedure which follows.

The test utilized T-adhesion pads prepared by placing 1.52 mm (60 gauge) slabs of uncured fully compounded rubber skim stock on 1.30 mm (51 gauge) fabric reinforced rubber backing. Commercial bright steel and brass-coated cables (7/2 + 1 wire) were placed between two pads of the reinforced rubber skim stock with the wires in contact with the uncured rubber skim at 1.25 cm intervals. The construction of the cables included a core of two wires which were wrapped by seven strands of wire 0.22 mm in diameter which were in turn wrapped by a single strand of wire 0.15 mm in diameter. The width of each adhesion pad was 1.25 cm. The pads were placed in a preheated curing mold and were cured for 30 minutes at 149°C. Rubber-steel cord adhesion testing was done on a Model 1130 Instron Universal Tester at a crosshead speed of 25.4 cm per minute at 110°C. The T-adhesion pads were preheated in the 110°C oven for 20 minutes prior to testing.

Detailed T-Adhesion Test Procedure

1. Using a Clicker machine and a 15.24 × 1.25 cm die, prepare an adequate number of calendered and control stock samples for T-adhesion pad building.
2. Use one piece of calendered fabric reinforced rubber backing (0.1295 cm).
3. Ply one piece of 1.52 mm (60 gauge) control rubber skim stock (0.1524 cm) onto the fabric backing.
4. Place sample in building jig with fabric side down.
5. Place ten cords (of brass or zinc coated wire) approximately 17.78 cm in length equally spaced on top of the two piece assembly.
6. Invert another 2 ply assembly, made as in items 1, 2 and 3, on top of cords so that cords are between the 2 layers of rubber skim stock to be tested.
7. This assembly should now fit snugly into the cavity of the curing mold.
8. Adhesion pads shall be cured for 30 minutes at 149°C and then allowed to equilibrate for 24 hours before testing.
9. Testing Machine: Model 1130 Instron Universal Tester.
10. Test speed 25.4 cm/minute; testing temperature, 110°C after 20 minutes preheat.
11. The top grip shall be of a special holder made for the cured sample, with a slot in the bottom to permit the sample to be inserted with the wires protruding. The bottom grip should be a wedge type, designed to exert increasing tightening as each wire is pulled from the cured sample.
12. Record 10 wire pull-outs and average. Multiply average pull-out force value by 0.3572 to obtain kilograms per centimeter.

In the tests which follow, a rubber skim stock, composition A, was prepared which did not contain the adhesion promoting ingredients of the present invention. Rubber compositions B and C were prepared exactly as was composition A except that they contained 2.0 phr and 4.0 phr cobalt chloride bis(8-hydroxy- quinolate), respectively. Rubber compositions D and E were also prepared exactly as was composition A except that 2.0 phr and 4.0 phr of cobalt bis(8-hydroxyquinolate) were added. Thus, the effect of either ingredient in different amounts is shown for comparison against the control stock. It is to be noted that the control stock already contained certain additives, such as resorcinol and Manobond C®, for providing good adhesion properties between the rubber and brass-plated steel cord. Improved adhesion in a natural rubber stock containing Manobond C has been demonstrated in US—A—4 267 079. The stock containing Manobond C was employed as a control.

The formulation of composition A was as follows with all parts given on the basis of parts per hundred parts of rubber (phr) by weight.

| Compounding Ingredients | Composition A |
| --- | --- |
| Natural Rubber | 75 |
| Polybutadiene | 25 |
| FEF Black | 55 |
| Silica | 12.5 |
| Zinc Oxide | 10 |
| Stearic Acid | 1.0 |
| Santoflex 13®[1] | 1.0 |
| Hydrocarbon resin[2] | 5.0 |
| Resorcinol | 4.0 |
| Manobond C®[3] | 3.5 |
| Sulfur | 5.6 |
| Oil | 1.4 |
| Cyrez 963 resin®[4] | 6.0 |
| NOBS Special accelerator[5] | 0.8 |

[1] N-(1,3-dimethylbutyl)-N'-phenyl-p-phenylenediamine
[2] Petroleum derived aliphatic hydrocarbon resin
[3] Cobalt and boron containing additive commercially available from Wyrough and Loser, Inc., Trenton, New Jersey
[4] Hydroxy methyl melamine resin manufactured by American Cyanamid Co.
[5] N-oxydiethylene benzothiazole-2-sulfenamide (NOBS Special accelerator)

It is to be understood that the foregoing composition of the rubber skim stock, composition A, has been presented solely to enable those skilled in the art to have at least one rubber skim stock with which to practice the invention. As such, the present invention is not to be limited only to this specific formulation.

The five compositions were each used to build T-adhesion pads with bright steel and brass-plated steel cord. As stated hereinabove, the particular steel cord construction employed for this testing has two strands of wire wrapped by seven strands which is in turn wrapped by a single strand. This configuration or style is commonly referred to in the art as 7/2 + 1 (7 over 2 plus 1) steel cord style. Steel cord style, however, is not a limitation to the present invention and, therefore, other styles of steel cord are applicable. Thus, even single strands of bright or brass or zinc-plated steel cord may be employed.

Three sets of tests were conducted on each of the five stocks for comparison. Table I shows the results of the testing under normal (unaged) conditions and after aging in a humidity chamber at 90 percent relative humidity at 30°C (95°F) for 60 to 180 days. Humidity chamber aging is significant for determining the chemical stability of chemical bonds formed between the rubber stock and the metallic reinforcement when exposed to conditions of high relative humidity and high temperature, as compared to ambient, and

4

extended periods of time. The force necessary to pull or remove the metallic reinforcement from the vulcanized rubber skim stock is given first, in N/cm (kg/cm), followed by the percent of rubber skim stock remaining on the surface of the metallic reinforcement. The amount of rubber skim stock remaining on the metallic reinforcement was determined by visual examination and has been reported as % rubber coverage.

TABLE I

Steelcord T-Adhesion Test

| Rubber Composition | A | B | C | D | E |
|---|---|---|---|---|---|
| Cobalt chloride bis(8-hydroxyquinolate) phr | — | 2 | 4 | — | — |
| Cobalt bis(8-hydroxyquinolate) phr | — | — | — | 2 | 4 |

Test A
Normal (Unaged)[a]

| | A | B | C | D | E |
|---|---|---|---|---|---|
| **Brass-plated cord** | | | | | |
| N/cm | 265 | 240 | 238 | 250 | 240 |
| (kg/cm) | (26.97) | (24.47) | (24.29) | (25.54) | (24.47) |
| % rubber coverage | 100 | 100 | 90 | 100 | 100 |
| **Bright steel cord** | | | | | |
| N/cm | 178 | 198 | 194 | 196 | 191 |
| (kg/cm) | (18.22) | (20.19) | (19.82) | (20.00) | (19.47) |
| % rubber coverage | 80 | 80 | 80 | 80 | 80 |

Test B
60 Day Humidity Chamber Test[b]

| | A | B | C | D | E |
|---|---|---|---|---|---|
| **Brass-plated cord** | | | | | |
| N/cm | 237 | 214 | 194 | 224 | 214 |
| (kg/cm) | (24.11) | (21.79) | (19.82) | (22.86) | (21.79) |
| % rubber coverage | 90 | 90 | 90 | 100 | 100 |
| **Bright steel cord** | | | | | |
| N/cm | 112 | 145 | 149 | 165 | 149 |
| (kg/cm) | (11.43) | (14.82) | (15.18) | (16.79) | (15.18) |
| % rubber coverage | 30 | 80 | 70 | 80 | 80 |

Test C
180 Day Humidity Chamber Test[b]

| | A | B | C | D | E |
|---|---|---|---|---|---|
| **Brass-plated cord** | | | | | |
| N/cm | 203 | 181 | 176 | 172 | 189 |
| (kg/cm) | (20.72) | (18.40) | (17.69) | (17.50) | (19.29) |
| % rubber coverage | 100 | 90 | 100 | 100 | 100 |
| **Bright steel cord** | | | | | |
| N/cm | 107 | 140 | 151 | 117 | 145 |
| (kg/cm) | (10.89) | (14.29) | (15.36) | (11.97) | (14.82) |
| % rubber coverage | 20 | 0 | 70 | 30 | 70 |

[a] T-adhesion pads cured 30 minutes at 149°C and tested at 110°C
[b] T-adhesion pads cured 30 minutes at 149°C, humidity aged at 90% relative humidity, 30°C for increasing period and tested at 110°C

As can be determined from Table I, Tests A—C, adhesion of compositions B—E to bright steel cord was significantly better than for composition A during the unaged tests and most of the long term humidity chamber aging tests. Rubber composition A, which contained neither cobalt component, showed lower adhesion values in every instance with bright steel. Also significant is the fact that the cobalt components of the present invention did not adversely affect the adhesion between the rubber and brass-plated steel cord. Several of the tests were also repeated with zinc-plated steel cord. While not reported here, the results showed adhesion was not adversely affected.

The rubber coverage measurement is deemed to be significant in that it visually represents the increased adhesion of the rubber composition to the plated steel cord. As is well known to those skilled in the art, the amount of rubber left adhering to the steel cord after it has been pulled from a cured T-adhesion pad represents the relationship of the adhesive force attaching the rubber composition to the surface of the steel cord and the tensile strength of the rubber composition itself. Large percentages of rubber coverage indicate that the adhesion to the steel cord exceeds the internal strength of the rubber composition itself, *i.e.,* tear strength. Therefore, when the rubber coverage is very high it can be concluded that the metal to rubber adhesion is greter than the force measured to pull the steel cord out of the rubber pad since the force measured was a result of the rubber composition rupturing and not the metal to rubber interface.

Rubber coverage was not lost in the unaged test (A) for any of the compositions. However, during long term humidity aging, Test B, composition A showed poor coverage to bright steel while all of the other compositions did well after 60 days. In Test C, after 180 days, compositions C and E, containing 4.0 phr of the cobalt compounds of the present invention provided the highest rubber coverage.

Based on the foregoing results reported in Table I, we consider the presence of a cobalt compound such as cobalt chloride bis(8-hydroxyquinolate) or cobalt bis(8-hydroxyquinolate) in a rubber skim stock to be effective in promoting adhesion between the rubber skim stock and bright steel reinforcement. As stated hereinabove, the rubber can be natural or synthetic or a blend and formulated as a rubber stock or a skim stock. Also, the wire coating in the practice of our invention can be, for example, brass-plated wire, *i.e.,* 70% Cu, 30% Zn, or zinc-plated wire. The wire can be in the form of a strand, mat, web, ply or braid. Inasmuch as the adhesion to bright steel is improved, uncoated, unoxidized steel can be employed, where practicable.

The present invention also finds utility in, for example, brassed or bright metal-rubber articles such as motor mounts, cutless bearings, torsilastic springs, power belts, printing rolls, metal wire reinforced or braided hose, electrical deicers, shoe heels and wherever it is desired to secure rubber to metal or provide a flexible and strong, thermally stable bond between the same.

**Claims**

1. A vulcanizable rubber composition having improved metal adhesion and metal adhesion retention properties with bright steel metallic reinforcing elements embedded therein, characterized in that from 0.2 to 6.0 parts by weight of a compound selected from the group consisting of cobalt chloride bis(8-hydroxy-quinolate) and cobalt bis(8-hydroxyquinolate) per 100 parts of the rubber component in said rubber composition is incorporated into said rubber composition prior to curing.

2. A rubber composition as set forth in claim 1, wherein said cobalt compound is cobalt chloride bis(8-hydroxyquinolate) and is present in an amount of from 2.0 to 4.0 parts per 100 parts of the rubber.

3. A rubber composition as set forth in claim 1, wherein said cobalt compound is cobalt bis(8-hydroxy-quinolate) and is present in an amount of from 2.0 to 4.0 parts per 100 parts of the rubber.

4. A rubber composition as set forth in claim 1, wherein said bright steel metallic reinforcing elements can be at least partially coated with brass or zinc plating.

5. A tire containing a cured rubber composition having improved metal adhesion and metal adhesion retention properties with bright steel metallic reinforcing elements embedded therein, characterized in that from 0.2 to 6.0 parts by weight of a compound selected from the group consisting of cobalt chloride bis(8-hydroxyquinolate) and cobalt bis(8-hydroxyquinolate) per 100 parts of the rubber component in said rubber composition is incorporated into said rubber composition prior to curing.

6. A tire, as set forth in claim 5, wherein said cobalt compound is cobalt chloride bis(8-hydroxy-quinolate) and is present in an amount of from 2.0 to 4.0 parts per 100 parts of the rubber.

7. A tire, as set forth in claim 6, wherein said cobalt compound is cobalt bis(8-hydroxyquinolate) and is present in an amount of from 2.0 to 4.0 parts per 100 parts of the rubber.

8. A tire, as set forth in claim 5, wherein said bright steel metallic reinforcing elements can be at least partially coated with brass or zinc plating.

9. A method for improving metal adhesion and metal adhesion retention properties between a vulcanizable rubber composition and bright steel metallic reinforcing elements, characterized by comprising the steps of: dispersing from 0.2 to 6.0 parts by weight of a compound selected from the group consisting of cobalt chloride bis(8-hydroxyquinolate) and cobalt bis(8-hydroxyquinolate) per 100 parts of the rubber components in said rubber composition into said rubber composition prior to curing.

10. A method, as set forth in claim 9, wherein said cobalt compound is cobalt chloride bis(8-hydroxy-quinolate) and is present in an amount of from 2.0 to 4.0 parts per 100 parts of the rubber.

11. A method, as set forth in claim 10, wherein said cobalt compound is cobalt bis(8-hydroxyquinolate) and is present in an amount of from 2.0 to 4.0 parts per 100 parts of the rubber.

12. A method, as set forth in claim 9, wherein said bright steel metallic reinforcing elements can be at least partially coated with brass or zinc plating.

## Revendications

1. Composition de caoutchouc vulcanisable douée de très bonnes propriétés d'adhérence aux métaux et de rétention de l'adhérence aux métaux, dans laquelle sont noyés des éléments métalliques d'armature en acier clair, caractérisée en ce que 0,2 à 6,0 parties en poids d'un composé choisi dans le groupe comprenant le bis-(8-hydroxyquinolate) de chlorure de cobalt et le bis-(8-hydroxyquinolate) de cobalt pour 100 parties du composant caoutchouc dans la composition de caoutchouc sont incorporées dans ladite composition avant la vulcanisation.

2. Composition de caoutchouc suivant la revendication 1, dans laquelle le composé de cobalt est le bis-(8-hydroxyquinolate) de chlorure de cobalt et est présent en une quantité de 2,0 à 4,0 parties pour 100 parties de caoutchouc.

3. Composition de caoutchouc suivant la revendication 1, dans laquelle le composé de cobalt est le bis-(8-hydroxyquinolate) de cobalt et est présent en une quantité de 2,0 à 4,0 parties pour 100 parties de caoutchouc.

4. Composition de caoutchouc suivant la revendication 1, dans laquelle les éléments d'armature métallique en acier clair peuvent être au moins partiellement revêtus d'un dépôt de laiton ou de zinc.

5. Bandage pneumatique contenant une composition de caoutchouc vulcanisé, douée de très bonnes propriétés d'adhérence aux métaux et de rétention de l'adhérence aux métaux, dans laquelle sont noyés des éléments d'armature métallique en acier clair, caractérisé en ce que 0,2 à 6,0 parties d'un composé choisi dans le groupe comprenant le bis-(8-hydroxyquinolate) de chlorure de cobalt et le bis-(8-hydroxyquinolate) de cobalt pour 100 parties du composant caoutchouc dans la composition de caoutchouc sont incorporées dans ladite composition avant la vulcanisation.

6. Bandage pneumatique suivant la revendication 5, dans lequel le composé de cobalt est le bis-(8-hydroxyquinolate) de chlorure de cobalt et est présent en une quantité de 2,0 à 4,0 parties pour 100 parties de caoutchouc.

7. Bandage pneumatique suivant la revendication 6, dans lequel le composé de cobalt est le bis-(8-hydroxyquinolate) de cobalt et est présent en une quantité de 2,0 à 4,0 parties pour 100 parties de caoutchouc.

8. Bandage pneumatique suivant la revendication 5, dans lequel les éléments d'armature métallique en acier clair peuvent être au moins partiellement revêtus d'un dépôt de laiton ou de zinc.

9. Procédé pour améliorer les propriétés d'adhérence aux métaux et de rétention de l'adhérence aux métaux entre une composition de caoutchouc vulcanisable et des éléments d'armature métallique en acier clair, caractérisé en ce qu'il comprend les étapes consistant: à disperser 0,2 à 6,0 parties en poids d'un composé choisi dans le groupe comprenant le bis-(8-hydroxyquinolate) de chlorure de cobalt et le bis-(8-hydroxyquinolate) de cobalt pour 100 parties du composant caoutchouc dans la composition de caoutchouc, dans ladite composition avant la vulcanisation.

10. Procédé suivant la revendication 9, dans lequel le composé de cobalt est le bis-(8-hydroxyquinolate) de chlorure de cobalt et est présent en une quantité de 2,0 à 4,0 parties pour 100 parties de caoutchouc.

11. Procédé suivant la revendication 10, dans lequel le composé de cobalt est le bis-(8-hydroxyquinolate) de cobalt et est présent en une quantité de 2,0 à 4,0 parties pour 100 parties de caoutchouc.

12. Procédé suivant la revendication 9, dans lequel les éléments d'armature métallique en acier clair peuvent être au moins partiellement revêtus d'un dépôt de laiton ou de zinc.

## Patentansprüche

1. Vulkanisierbare Kautschukmasse mit verbesserten Metalladhäsions- und Metalladhäsionsretentionseigenschaften gegenüber darin eingebetteten Metallverstärkungselementen aus glänzendem Stahl, dadurch gekennzeichnet, daß sie 0,2 bis 6,0 Gewichtsteile einer Verbindung, ausgewählt aus der Gruppe Kobaltchlorid-bis(8-hydroxychinolat) und Kobalt-bis(8-hydroxychinolat) pro 100 Teile Kautschukkomponente enthält, wobei diese Masse in die Kautschukmasse vor der Härtung eingearbeitet worden ist.

2. Kautschukmasse nach Anspruch 1, dadurch gekennzeichnet, daß die Kobaltverbindung Kobaltchlorid-bis(8-hydroxychinolat) ist und in einer Menge von 2,0 bis 4,0 Teilen pro 100 Teile Kautschuk vorhanden ist.

3. Kautschukmasse nach Anspruch 1, dadurch gekennzeichnet, daß die Kobaltverbindung Kobalt-bis(8-hydroxychinolat) ist und in einer Menge von 2,0 bis 4,0 Teilen pro 100 Teile Kautschuk vorhanden ist.

4. Kautschukmasse nach Anspruch 1, dadurch gekennzeichnet, daß die Metallverstärkungselemente aus glänzendem Stahl mindestens teilweise mit einem Überzug aus Messing oder Zinkplattierung überzogen sind.

5. Reifen aus einer gehärteten Kautschukmasse mit verbesserten Metalladhäsions- und Metalladhäsionsretentionseigenschaften gegenüber darin eingebetteten Metallverstärkungselementen aus glänzendem Stahl, dadurch gekennzeichnet, daß in die Kautschukmasse 0,2 bis 6,0 Gewichtsteile einer Verbindung, ausgewählt aus der Gruppe Kobaltchlorid-bis(8-hydroxychinolat) und Kobalt-bis(8-hydroxychinolat) pro 100 Teile Kautschukmasse vor der Härtung der Kautschukmasse eingearbeitet worden ist.

6. Reifen nach Anspruch 5, dadurch gekennzeichnet, daß die Kobaltverbindung Kobaltchlorid-bis(8-hydroxychinolat) ist und daß sie in einer Menge von 2,0 bis 4,0 Teilen pro 100 Teile Kautschuk vorhanden ist.

7. Reifen nach Anspruch 6, dadurch gekennzeichnet, daß die Kobaltverbindung Kobalt-bis(8-hydroxychinolat) ist und daß sie in einer Menge von 2,0 bis 4,0 Teilen pro 100 Teile Kautschuk vorhanden ist.

8. Reifen nach Anspruch 5, dadurch gekennzeichnet, daß die Metallverstärkungselemente aus glänzendem Stahl mindestens teilweise mit Messing oder einer Zinkplattierung überzogen sind.

9. Verfahren zur Verbesserung der Metalladhäsions- und Metalladhäsionsretentionseigenschaften zwischen einer vulkanisierbaren Kautschukmasse und Metallverstärkungselementen aus glänzendem Stahl, dadurch gekennzeichnet, daß man 0,2 bis 6,0 Gewichtsteile einer Verbindung, ausgewählt aus der Gruppe Kobaltchlorid-bis(8-hydroxychinolat) und Kobalt-bis(8-hydroxychinolat) pro 100 Teile Kautschuk in die Kautschukmasse vor der Härtung der Kautschukmasse einarbeitet.

10. Verfahren nach Anspruch 9, dadurch gekennzeichnet, daß die Kobaltverbindung Kobaltchlorid-bis(8-hydroxychinolat) ist und in einer Menge von 0,2 bis 4,0 Teilen pro 100 Teile Kautschuk vorhanden ist.

11. Verfahren nach Anspruch 10, dadurch gekennzeichnet, daß die Kobaltverbindung Kobalt-bis(8-hydroxychinolat) ist und in einer Menge von 2,0 bis 4,0 Teilen pro 100 Teile Kautschuk vorhanden ist.

12. Verfahren nach Anspruch 9, dadurch gekennzeichnet, daß die Metallverstärkungselemente aus glänzendem Stahl mindestens teilweise mit Messing oder Zinkplattierung überzogen sind.